Europäisches Patentamt

European Patent Office

Office européen des brevets

(11) Numéro de publication : **0 507 715 A1**

# (12) DEMANDE DE BREVET EUROPEEN

(21) Numéro de dépôt : **92460010.9**

(22) Date de dépôt : **02.04.92**

(51) Int. Cl.⁵ : **H04B 10/14,** H04B 10/10

(30) Priorité : **03.04.91 FR 9104268**

(43) Date de publication de la demande :
**07.10.92 Bulletin 92/41**

(84) Etats contractants désignés :
**CH DE ES GB IT LI NL**

(71) Demandeur : **J. BALAN SA**
**Z.I. Route de Quévert, B.P. 262**
**F-22105 Dinan Cédex (FR)**

(72) Inventeur : **Bolusset, Christain Kerlessanouet**
**F-22700 Perros Guirec (FR)**
Inventeur : **Stainton, David**
**Rue de Croix d'en Hue, La Poterie**
**F-22400 Lamballe (FR)**

(74) Mandataire : **Le Guen, Louis François**
**Cabinet Louis Le Guen 38, rue Levavasseur**
**B.P. 91**
**F-35802 Dinard Cédex (FR)**

(54) **Système de liaison optique par modules appariés.**

(57)   La presente invention concerne un système de liaison optique par modules appariés assurant une transmission de données entre un système informatique, tel qu'un micro-ordinateur, mini-ordinateur ou ordinateur et au moins un réseau informatique précâblé ou un autre système informatique ou un dispositif périphérique, tel qu'un modem, une imprimante.

Ladite liaison optique est constituée, côté d'un premier système informatique (10), d'une première unité de transmission optique (20) et, côté de la prise de raccordement (80), du second système informatique (60) ou du dispositif périphérique (40, 50), d'une seconde unité de transmission optique (70), un module (21, 22, 23) de la première unité (20) étant apparié biunivoquement à un module (71, 72, 73) de la seconde unité (70).

La longueur d'onde affectée à deux modules appariés formant une première liaison optique est différente de celle affectée aux deux modules appariés formant une seconde liaison.

FIG.1

EP 0 507 715 A1

La présente invention concerne un système de liaison optique par modules appariés assurant une transmission de données entre un système informatique, tel qu'un micro-ordinateur, mini-ordinateur ou ordinateur et au moins un réseau informatique précâblé ou un autre système informatique ou un dispositif périphérique, tel qu'un modem, une imprimante, etc.

A l'heure actuelle, les systèmes déterminaux informatiques sont reliés à d'autres systèmes informatiques au moyen de câbles qui sont de types différents selon les modes de transmission assurés. Il en résulte une multiplicité de câbles qui, derrière ces systèmes, pendent de manière désordonnée, créant ainsi des liaisons peu esthétiques. Par ailleurs, de tels câbles peuvent être source de pannes créées par leur débranchement ou coupure lors de simples manipulations ou des déplacements des systèmes informatiques auxquels ils sont reliés.

Notons encore un inconvénient des liaisons par câble: les systèmes auxquels ils sont raccordés sont difficilement déplaçables d'un endroit à un autre d'une pièce. Dans le tertiaire, l'intérêt du précâblage est de faciliter les déménagements entraînés par les restructurations de service. Néanmoins au cours de ces déménagements, 'on se heurte souvent, au moment de la réinstallation à des problèmes de longueurs de câbles entre les systèmes informatiques et les prises de raccordement au réseau principal.

La présente invention se propose de résoudre ces différents problèmes.

A cet effet, un premier système informatique est relié à une prise de raccordement d'un réseau informatique, à un second système informatique ou à un dispositif périphérique au moyen d'une liaison optique constituée, côté du premier système informatique, d'une première unité de transmission optique constituée d'au moins un module de transmission optique et, côté de la prise de raccordement, du second système informatique ou du dispositif périphérique, d'une seconde unité de transmission optique constituée d'au moins un module de transmission, un module de la première unité étant apparié biunivoquement à un module de la seconde unité, chaque module étant constitué d'un port d'entrée-sortie relié, pour chaque module de la première unité, à un port d'entrée-sortie correspondant du premier système informatique et, pour chaque module de la seconde unité, à la prise de raccordement dudit réseau ou à un port d'entrée-sortie correspondant du second système informatique ou du dispositif périphérique, d'un émetteur de lumière relié aux lignes de données dudit port d'entrée-sortie et d'un détecteur de lumière relié aux lignes de données dudit port d'entrée-sortie, l'émetteur émettant un rayonnement ayant une longueur d'onde donnée affectée au module concerné et un filtre optique étant placé devant le détecteur de lumière pour ne laisser passer que les rayonnements reçus dont la longueur d'onde correspond à celle d'émission de l'émetteur, la longueur d'onde affectée à deux modules appariés formant une première liaison optique étant différente de celle affectée aux deux modules appariés formant une seconde liaison.

Selon une autre caractéristique de l'invention, le détecteur est relié au port d'entrée-sortie par l'intermédiaire d'un démodulateur.

Selon une autre caractéristique de l'invention, ledit démodulateur est un comparateur qui compare les signaux délivrés par le détecteur à une valeur de seuil prédéterminée.

Selon une autre caractéristique de l'invention, le port d'entrée-sortie est du type à transmission de données en série et l'émetteur et le détecteur sont reliés à la ligne de données dudit port.

Selon une autre caractéristique de l'invention, le port d'entrée-sortie est du type à transmission de données en série et l'émetteur et la sortie dudit démodulateur sont reliés à la ligne de données dudit port.

Selon une autre caractéristique de l'invention, le port d'entrée-sortie est du type à transmission de données en parallèle, l'émetteur étant relié à la sortie d'un convertisseur parallèle/série dont l'entrée est reliée aux lignes de données du port d'entrée-sortie du module et le détecteur étant relié à l'entrée d'un convertisseur série/parallèle dont la sortie est reliée aux lignes de données du port d'entrée-sortie du module.

Selon une autre caractéristique de l'invention le port d'entrée-sortie est du type à transmission de données en parallèle, l'émetteur étant relié à la sortie d'un convertisseur parallèle/série dont l'entrée est reliée aux lignes de données du port d'entrée-sortie du module et la sortie du démodulateur étant reliée à l'entrée d'un convertisseur série/parallèle dont la sortie est reliée aux lignes de données du port d'entrée-sortie du module.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 montre une installation équipée d'une liaison optique par modules selon l'invention entre un système informatique et une prise de raccordement d'un réseau, et

les Figs. 2a à 2c montrent respectivement des modes de réalisation de modules selon l'invention.

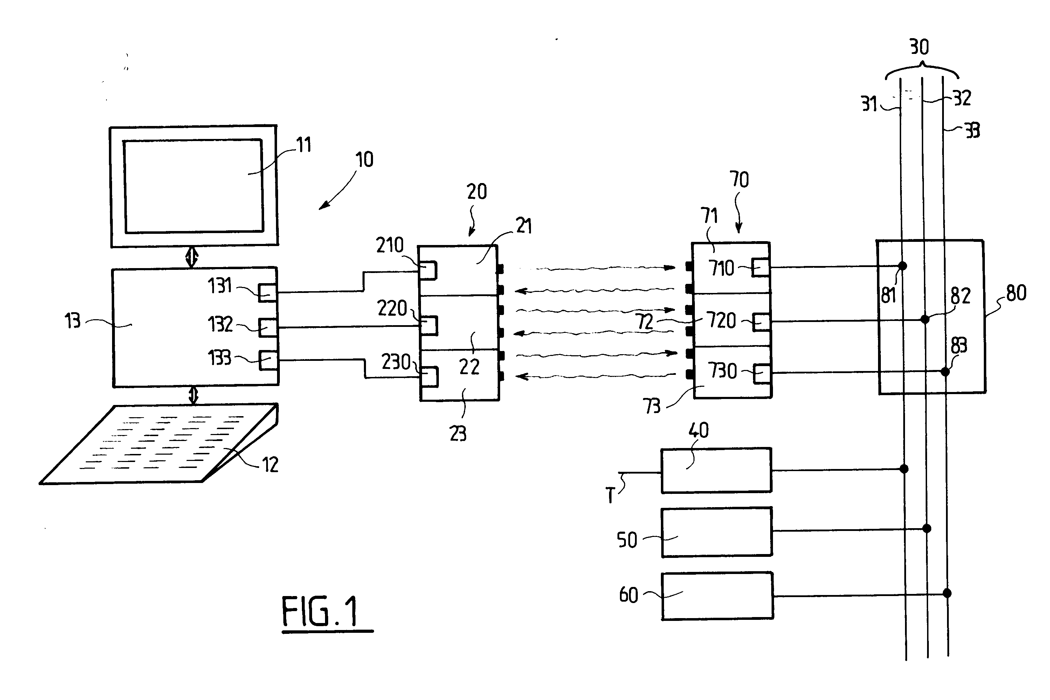

A la Fig. 1, on a représenté un système informatique 10 qui est constitué, par exemple, d'un micro-ordinateur comprenant un clavier 11 et un écran 12 respectivement reliés à une unité centrale 13. Il pourrait également s'agir d'un ordinateur, d'un mini-ordinateur ou de tout autre système de traitement informatique.

Telle qu'elle est représentée, l'unité centrale 13 est pourvue de trois ports d'entrée-sortie 131, 132, 133 qui sont, par exemple, respectivement à transmission de données selon un premier mode, un second mode et un troisième mode. Notons que ces trois modes ne sont pas nécessairement différents. De manière générale, chaque port d'entrée-sortie 131, 132, 133 peut, selon le mode de transmission qu'il supporte, être du type "RS 232", "IEEE 488", "TOKEN RING" R, "ETHERNET" R, "RNIS", etc.

Le port 131 de premier type est relié au port d'entrée-sortie 210 d'un premier module de transmission 21 d'un premier type. Le port 132 de second type est relié au port d'entrée-sortie 220 d'un second module de transmission 22 d'un second type. Quant au port 133, il est relié au port d'entrée-sortie 230 d'un troisième module 23 de troisième type. Les modules 21, 22, 23 forment ensemble une unité de transmission optique 20.

A la Fig. 1, on voit également un ensemble de lignes 31, 32, 33 formant le support câblé 30 d'un réseau informatique. Sur la ligne 31, les signaux circulent selon le premier mode de transmission du port 131; sur la ligne 32, ils circulent selon le second mode de transmission du port 132 et, sur la ligne 33, ils circulent selon le troisième mode du port 133. A titre d'exemple, on a représenté des dispositifs périphériques, tels qu'un modem 40 relié, d'une part, à une ligne téléphonique T et, d'autre part, à la ligne 31, une imprimante 50 ayant son port d'entrée-sortie qui est relié à la ligne 32 et un système informatique 60 relié à la ligne 33.

Une unité de transmission 70 est constituée de trois modules de transmission 71, 72 et 73, respectivement de premier, second et troisième type. Ils ont leurs ports d'entrée-sortie 710, 720 et 730 qui sont respectivement reliés aux trois plots de connexion 81, 82 et 83 d'une prise de raccordement 80 du réseau 30. Les plots 81, 82 et 83 sont respectivement reliés aux lignes 31, 32 et 33.

On a décrit un réseau 30 auquel sont reliés, d'une part, des dispositifs périphériques et, d'autre part, un système informatique 10. Néanmoins, l'invention s'applique également au cas où les dispositifs périphériques 40, 50 et 60 sont reliés au système 10. Dans ce cas, les modules 71, 72, 73 sont directement reliés aux dispositifs 40, 50 et 60.

Chaque module 21, 22, 23, 71, 72, 73 peut émettre et détecter un rayonnement d'un domaine de longueurs d'onde données dépendant du mode de transmission mis en jeu dans la liaison qu'il assure. Pour réaliser une liaison déterminée, les modules 21, 22, 23 sont respectivement biunivoquement appariés avec les modules 71, 72, 73. Ainsi, la différentiation entre les signaux optiques émis par les différents modules assurant une même liaison optique se fait en longueur d'onde. Par exemple, les modules de premier type, tels que ceux référencés 21 et 71, n'émettent que des rayonnements d'une première longueur d'onde, par exemple dans le rouge, et ne sont sensibles qu'à ces rayonnements, les modules du second type, tels que ceux référencés 22 et 72, n'émettent que des rayonnements d'une seconde longueur d'onde, par exemple dans le vert, et ne sont sensibles qu'à ces rayonnements et les modules du troisième type, tels que ceux référencés 23 et 73 n'émettent que des rayonnements d'une troisième longueur d'onde, par exemple dans le bleu, et ne sont sensibles qu'à ces rayonnements.

Hormis leurs longueurs d'onde d'émission et de réception, les modules 21 à 23 et 71 à 73 ont la même constitution.

Dans l'exemple représenté à la Fig. 1, on comprendra que, si le système informatique 10 commande l'impression d'un document, il établit une liaison entre son port d'entrée-sortie 132 et l'imprimante 50 via la liaison optique réalisée par les modules 22 et 72 appariés. De même, s'il doit transmettre ou recevoir des données du modem 50, il établit une liaison optique entre son port d'entrée-sortie 131 et le modem 50 via les modules 21 et 71 appariés. Enfin, pour avoir accès au système informatique 60, il établit une liaison optique à partir de son port d'entrée-sortie 133 via les modules 23 et 73.

Notons que les collisions de données qui pourraient avoir lieu quand, par exemple, un des modules de l'unité 20 émet et reçoit en même temps des rayonnements du module apparié de l'unité 70, sont traitées par le système informatique 10 lui-même.

On a décrit des liaisons optiques réalisées au moyen de trois paires de modules de type différent, mais il est évident qu'un nombre différent de liaisons pourrait être établi avec un nombre correspondant de paires de modules de type différent ou pas, selon les besoins. Dans le cas où plusieurs modules de même type sont utilisés, leurs longueurs d'onde de transmission devront être prévues différentes.

Notons que l'invention ne se limite pas aux longueurs d'onde correspondant aux couleurs mentionnées ci-dessus, ni même à celles du domaine visible.

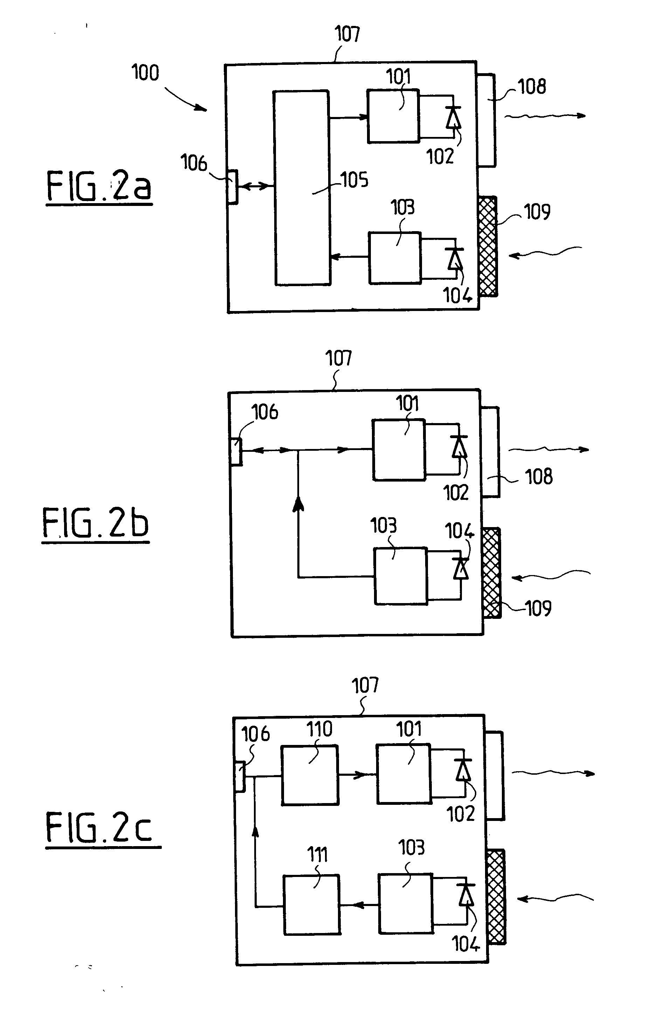

A la Fig 2a, on a représenté le schéma électrique synoptique d'un module 100. Il comprend un amplificateur 101 dont la sortie est reliée à un émetteur 102 de lumière d'une longueur d'onde donnée. L'émetteur 102 est, par exemple, une diode électroluminescente ou une diode de type laser. Il comprend également un démodulateur 103 dont l'entrée est, reliée à un détecteur de lumière 104, par exemple une photodiode ou un phototransistor. La sortie du démodulateur 103 est reliée à une entrée d'une unité de commande 105 dont une sortie est reliée à l'entrée de l'amplificateur 101. L'unité 105 comprend un port d'entrée-sortie relié au port d'entrée-sortie 106 du module 100.

Le démodulateur 103 est avantageusement un comparateur qui compare les signaux que lui délivre le détecteur avec une valeur de seuil prédéterminée. Il permet de réaliser une détection des rayonnements incidents qui soit insensible aux rayonnements ambiants.

Dans le boîtier 107 qui contient le circuit électronique du module 100, des fenêtres 108 et 109 sont prévues pour réaliser une communication optique entre l'intérieur et l'extérieur du bottier 107. La fenêtre 108 se trouve en regard de l'émetteur 102 et est avantageusement transparente alors que la fenêtre 109 se trouve en regard du détecteur 104 et est constituée d'un filtre optique de couleur laissant passer les seuls rayonnements d'un domaine de longueurs d'onde incluant la longueur d'onde émise par l'émetteur 102.

De préférence, l'émetteur 102 a un cône d'émission d'angle supérieur à 10°, ce qui permet un déplacement relatif entre les modules de l'unité 20 et ceux de l'unité 70.

L'unité de commande 105 est prévue pour permettre l'échange de données entre le port d'entrée-sortie 106 du module et l'amplificateur 101 ainsi qu'entre le démodulateur 103 et le port d'entrée-sortie 106. Ainsi, lorsque des données sont envoyées sur le port 106, elles sont transmises à l'amplificateur 101 qui commande alors l'émetteur 102 pour qu'il émette un signal optique modulé. Lorsqu'un rayonnement modulé est reçu par le module, il est d'abord filtré par le filtre optique 109. Si la longueur d'onde de ce rayonnement ne correspond pas à la longueur d'onde de l'émetteur 102, le détecteur 104 ne le reçoit pas et ne délivre par conséquent pas de signaux au démodulateur 103. Par contre, si elle correspond à celle d'émission de l'émetteur 102, le détecteur 104 le détecte et transforme les signaux optiques en signaux électriques. Ces derniers sont transmis au démodulateur 103. Celui-ci compare, par exemple, ces signaux électriques à une valeur de seuil et délivre alors un signal démodulé qui est transmis à l'unité de commande 105. Celle-ci transmet les données reçues sur le port d'entrée-sortie 106.

On a représenté, aux Figs. 2b et 2c, des modes de réalisation de modules particuliers. Le module de la Fig. 2b est prévu pour recevoir, sur son port d'entrée-sortie 106, les signaux de données sous forme série. Le port 106 est, par exemple du type "RS 232". L'entrée de l'amplificateur 101 et la sortie du démodulateur 103 sont directement reliées à la ligne de données du port 106.

Le module de la Fig. 2c est pourvu d'un port d'entrée-sortie 106 du type parallèle, par exemple "IEEE 488". L'amplificateur 101 reçoit les signaux d'un convertisseur parallèle/série 110 dont l'entrée est reliée aux lignes de données du port 106. Un convertisseur série/parallèle 111 a son entrée reliée à la sortie du démodulateur 103 et a sa sortie directement reliée aux lignes de données du port du module 106.

**Revendications**

1) Système de liaison optique par modules appariés assurant une transmission de données entre un système informatique, tel qu'un micro-ordinateur, mini-ordinateur ou ordinateur et au moins un réseau informatique précâblé ou un autre système informatique ou un dispositif périphérique, tel qu'un modem, une imprimante, caractérisé en ce que ladite liaison optique est constituée, côté d'un premier système informatique (10), d'une première unité de transmission optique (20) constituée d'au moins un module de transmission optique (21, 22, 23) et, côté de la prise de raccordement (80), du second système informatique (60) ou du dispositif périphérique (40, 50), d'une seconde unité de transmission optique (70) constituée d'au moins un module de transmission optique (71, 72, 73), un module (21, 22, 23) de la première unité (20) étant apparié biunivoquement à un module (71, 72, 73) de la seconde unité (70), chaque module étant constitué d'un port d'entrée-sortie (106) relié, pour chaque module de la première unité (20), à un port d'entrée-sortie (131, 132, 133) correspondant du premier système informatique (10) et, pour chaque module de la seconde unité (70), à la prise de raccordement (80) dudit réseau ou à un port d'entrée-sortie correspondant du second système informatique ou du dispositif périphérique, d'un émetteur de lumière (102) relié aux lignes de données dudit port d'entrée-sortie (106) et d'un détecteur de lumière (104) relié aux lignes de données dudit port d'entrée-sortie (106), l'émetteur (102) émettant un rayonnement ayant une longueur d'onde donnée affectée au module concerné et un filtre optique (109) étant placé devant le détecteur de lumière (104) pour ne laisser passer que les rayonnements reçus dont la longueur d'onde correspond à celle d'émission de l'émetteur (102), la longueur d'onde affectée à deux modules appariés formant une première liaison optique étant différente de celle affectée aux deux modules appariés formant une seconde liaison.

2) Système selon la revendication 1, caractérisé en ce que le détecteur (104) est relié au port d'entrée-sortie (106) par l'intermédiaire d'un démodulateur (103).

3) Système selon la revendication 2, caractérisé en ce que ledit démodulateur (103) est un comparateur qui compare les signaux délivrés par le détecteur (104) à une valeur de seuil prédéterminée.

4) Système selon la revendication 1, caractérisé en ce que le port d'entrée-sortie (106) est du type à transmission de données en série et l'émetteur (102) et le détecteur (104) sont respectivement reliés à la ligne de données dudit port (106).

5) Système selon la revendication 2 ou 3, caractérisé en ce que le port d'entrée-sortie (106) est du type à transmission de données en série et l'émetteur (102) et la sortie dudit démodulateur (104) sont reliés à la ligne de données dudit port (106).

6) Système selon la revendication 1, caractérisé en ce que le port d'entrée-sortie (106) est du type à transmission de données en parallèle, l'émetteur (102) étant relié à la sortie d'un convertisseur parallèle/série (110) dont l'entrée est reliée aux lignes de données du port d'entrée-sortie (106) du module et le détecteur (104) étant relié à l'entrée d'un convertisseur série/parallèle (111) dont la sortie est reliée aux lignes de données du port d'entrée-sortie (106).

7) Système selon la revendication 2 ou 3, caractérisé en ce que le port d'entrée-sortie (106) est du type à transmission de données en parallèle, l'émetteur (102) étant relié à la sortie d'un convertisseur parallèle/série (110) dont l'entrée est reliée aux lignes de données du port d'entrée-sortie (106) du module et la sortie du démodulateur (103) étant reliée à l'entrée d'un convertisseur série/parallèle (111) dont la sortie est reliée aux lignes de données du port d'entrée-sortie (106) du module.

FIG.1

FIG.2a

FIG.2b

FIG.2c

**Office européen des brevets**

# RAPPORT DE RECHERCHE EUROPEENNE

Numero de la demande

EP 92 46 0010

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | WO-A-8 700 996 (INTERNATIONAL ROBOTIC ENGINEERING) * abrégé; page 4, ligne 12 - page 5, ligne 28; page 6, lignes 10-19; page 7, lignes 11-18; figures 1-3; revendication 1 * | 1 | H 04 B 10/14<br>H 04 B 10/10 |
| A | --- | 6,7 | |
| Y | EDN vol. 28, no. 14, juillet 1983, page 307; D. LAIDA: "Optical data link uses one IC" * en entier * | 1 | |
| A | idem --- | 2-5 | |
| A | IEEE TRANSACTIONS ON NUCLEAR SCIENCE vol. 36, no. 5, octobre 1989, pages 1449-1451; R.A. MCLAREN et al.: "A high speed fibre optic link for digital equipment corporation vaxes" * page 1449, paragraphe 2 - page 1450, paragraphe 5; figure 1 * --- | 1 | |
| A | PATENT ABSTRACTS OF JAPAN vol. 5, no. 82 (E-59)(754), 29 mai 1981; & JP - A - 56028538 (NEC) 20.03.1981 ----- | 1 | H 04 B |

DOMAINES TECHNIQUES RECHERCHES (Int. Cl.5)

Le présent rapport a été établi pour toutes les revendications

| Lieu de la recherche | Date d'achèvement de la recherche | Examinateur |
|---|---|---|
| BERLIN | 04-06-1992 | HYLLA W R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)